# EUROPÄISCHE PATENTSCHRIFT

(11) **EP 2 099 547 B1**
(45) Veröffentlichungstag und Bekanntmachung des Hinweises auf die Patenterteilung: **25.08.2010**
(21) Anmeldenummer: 07847349.3
(22) Anmeldetag: 26.11.2007
(51) Int. Cl.: B01D 46/00

(54) **VERFAHREN ZUR HERSTELLUNG EINES KERAMISCHEN FILTERKÖRPERS**
METHOD FOR THE PRODUCTION OF A CERAMIC FILTER MEMBER
PROCÉDÉ DE PRODUCTION D'UN CORPS FILTRANT EN CÉRAMIQUE

(30) Priorität: 27.11.2006 DE 102006056195
(43) Veröffentlichungstag der Anmeldung: 16.09.2009
(73) Patentinhaber: Mann + Hummel GmbH, 71638 Ludwigsburg (DE)
(72) Erfinder: LINHART, Jochen, 71409 Schwaikheim (DE); FRANZ, Andreas, 71638 Ludwigsburg (DE)
(86) Internationale Anmeldenummer: PCT/EP2007/062816
(87) Internationale Veröffentlichungsnummer: WO 2008/065077

(56) Entgegenhaltungen:
- WO-A-03/103940
- WO-A-2004/063539
- WO-A-2006/005668
- US-A1- 2004 231 307

## Beschreibung

### Technisches Gebiet

Die Erfindung betrifft ein Verfahren zur Herstellung eines keramischen Filterkörpers zur Filtrierung eines Abgasstromes eines Dieselmotors, wobei der Filterkörper flächige und poröse Filterabschnitte aufweist, die zur Durchströmung mit dem Abgasstrom quer zur Fläche der Filterabschnitte vorgesehen sind.

### Stand der Technik

Aus der DE 35 01 182 A1 ist ein Abgasfilter für Dieselmotoren bekannt. Die dort offenbarten keramischen Filterkörper weisen geschichtete, flächige und poröse Filterabschnitte auf, zwischen denen Gaskanäle gebildet sind. Die Gaskanäle sind wechselseitig verschlossen. Ein auf einer Seite in die dorthin offenen Gaskanäle einströmender Abgasstrom wird durch die Verschlussstopfen gezwungen, die porösen Filterabschnitte quer zu ihrer Fläche zu durchströmen. Die auf der gegenüberliegenden Seite befindlichen Abgaskanäle sind in die Abströmrichtung offen und geben den filtrierten Abgasstrom frei.

Zur Herstellung der dort gezeigten keramischen Filterkörper werden keine Angaben gemacht. Geometrisch vergleichbare Körper, wie sie beispielsweise von Abgaskatalysatoren bekannt sind, werden durch Extrudieren hergestellt. Dies erfordert einen hohen Werkzeugaufwand für die Formgebung. Die Freiheitsgrade bei der Formgebung des Filterkörpers und insbesondere der Filterabschnitte sowie der Gaskanäle ist durch den Extrusionsprozess eingeschränkt. Eine strömungsoptimale Ausgestaltung des Dieselpartikelfilters ist schwierig.

Die WO 2006/005668 A1 zeigt einen keramischen Abgasfilter für Brennkraftmaschinen, dessen Filterkörper aus keramisch imprägniertem Papier gebildet ist. Je eine glatte und eine wellige imprägnierte Papierbahn werden zu einem Halbzeug unter Bildung von Gaskanälen geschichtet und zu einem Wickelkörper aufgerollt. Die Wellen der gewellten Papierbahn haben über ihre gesamte Länge eine konstante Form, sodass auch die Gaskanäle entlang ihrer Lauflänge einen konstanten Querschnitt aufweisen.

Der Erfindung liegt die Aufgabe zugrunde, ein Verfahren zur Herstellung eines gattungsgemäßen keramischen Filterkörpers anzugeben, welches mit geringem Herstellungsaufwand eine optimale Formgebung ermöglicht.

Diese Aufgabe wird durch ein Verfahren mit den Merkmalen des Anspruchs 1 gelöst.

### Offenbarung der Erfindung

Nach der Erfindung sind folgende Verfahrensschritte vorgesehen: eine flächige, durchlässige Faserbahn insbesondere aus Filterpapier wird zunächst mit fein gemahlenem Keramikmaterial unter Bildung mindestens eines nicht imprägnierten Abschnittes imprägniert. Die nur teilweise keramisch imprägnierte Faserbahn wird daraufhin in die Form eines Rohlings des Filterkörpers derart gebracht, dass die imprägnierten Bereiche der Faserbahn die Form des Filterkörpers einnehmen. Die mit dem Keramikmaterial imprägnierte und geformte Faserbahn wird anschließend derart unter Temperatur gesintert, dass die Fasern der Faserbahn freibrennen und das Keramikmaterial unter Bildung des Filterkörpers mit den durchgängig zwischen ihren beiden Oberflächen porösen und gasdurchlässigen Filterabschnitten zusammensintert.

Die Faserbahn dient zunächst als Trägermaterial für das noch weiche, nicht gesinterte Keramikmaterial. Die imprägnierte Faserbahn kann mit geringem Werkzeugaufwand in eine nahezu beliebige Form gebracht werden, wodurch strömungsoptimale Dieselpartikelfilter nahezu ohne Einschränkung der geometrischen Formgebung gebildet werden können. Ein derart in Form gebrachter Filterrohling kann ohne weitere Stützung seine Form während der Vorbereitung und der Durchführung des Sinterns behalten. Die zum Sintern aufgebrachte Temperatur führt einerseits zum Zusammensintern des Keramikmaterials zu einem festen Körper. Andererseits verbrennen gleichzeitig die Fasern der Faserbahn, wodurch sich die gewünschte Porosität der Filterabschnitte einstellt. Ggf. an beiden Oberflächen frei liegenden Fasern stellen sicher, dass sich die Porosität auch an den Oberflächen einstellt, wodurch eine Gasdurchlässigkeit quer zur Fläche der Filterabschnitte sichergestellt ist. Die nur teilweise Imprägnierung unter Bildung nicht imprägnierter Abschnitte durch Ausstanzungen oder dgl. und/oder durch nicht imprägnierte bzw. von der Imprägnierung ausgesparte Abschnitte führt dazu, dass auch komplexe geometrische Formen erzeugt werden können. Nicht imprägnierte Abschnitte der Faserbahnen verbrennen beim Sintern nahezu rückstandsfrei und hinterlassen ein monolithisches keramisches Gebilde in Form der vorgenommenen Imprägnierung. Die Bildung von Öffnungen, geschwungenen Kanten oder dgl. ist möglich. Das erfindungsgemäße Verfahren ist einfach, kostengünstig und erlaubt nahezu unbegrenzte Möglichkeiten der Formgebung.

Das Tränken der Faserbahn mit der keramischen Emulsion erfolgt bevorzugt unter Einwirkung von Druck und insbesondere mittels einer Walze oder eines Rakels. Hierdurch ist ein gleichmäßiges Eindringen der keramischen Partikel ins Innere der Faserbahn sichergestellt.

Darüber hinaus eröffnen sich Möglichkeiten der selektiven Imprägnierung: zur Bildung eines nicht imprägnierten Abschnittes kann eine Walze vorteilhaft mit einer Oberflächenstrukturierung versehen sein, mit der nur an erhabenen, in ihrer Form vorgegebenen Stellen der Oberflächenstrukturierung ein Einwalzen der keramischen Masse in die Faserbahn erfolgt. Alternativ kann es zweckmäßig sein, dass die Bildung des nicht imprägnierten Abschnittes durch ein teilweise abgedecktes Sieb zwischen der Faserbahn und dem Rakel erfolgt. Vergleichbar zum Siebdruck wird die keramische Masse selektiv aufgetragen. Exakte Grenzkonturen zwischen imprägnierten und nicht imprägnierten Abschnitten sind mit geringem Aufwand erzielbar. Darüber hinaus ist die Möglichkeit eröffnet, verschiedene Bereiche der Faserbahn selektiv mit verschiedenen Keramikmaterialien zu tränken.

Alternativ oder in Kombination damit wird zur Bildung des nicht imprägnierten Abschnittes und insbesondere zur Bildung einer Öffnung ein Ausschnitt in die Faserbahn eingebracht bzw. die Faserbahn beschnitten. Dies kann zur präzisen Formgebung der gewünschten Öffnung beitragen. Beispielsweise in Verbindung mit einer in der Form angepassten Oberflächenstrukturierung der Walze oder einer entsprechenden Siebabdeckung wird keramisches Material nur dort aufgetragen, wo eine Imprägnierung der Faserbahn erwünscht ist. In Bereichen der Ausschnitte bzw. der Beschneidungen der Faserbahn wird kein Keramikmaterial aufgewalzt bzw. aufgerakelt. Materialverbrauch und Werkzeugverschmutzung sind minimiert. Ebenso ist es möglich, die Faserbahn zunächst vollflächig zu imprägnieren und erst anschließend die nicht imprägnierten Abschnitte durch Ausstanzungen, Beschneidungen oder dgl. herzustellen.

In vorteilhafter Weiterbildung werden zur Bildung eines Halbzeuges mit Gaskanälen zwei Faserbahnen entlang mehrerer Kontaktlinien miteinander verbunden, wobei mindestens eine Faserbahn zwischen zwei benachbarten Kontaktlinien räumlich geformt wird. Dies kann durch mehrere, gestapelte Faserbahnen geschehen, zwischen denen die Kontaktlinien gegeneinander versetzt sind, und die dann nach der Verklebung honigwabenartig gestreckt werden. Vorteilhaft werden die erste Faserbahn mit Wellstruktur und die zweite Faserbahn glatt hergestellt, wobei die beiden Faserbahnen zur Bildung der Gaskanäle an Wellenbergen der Wellstruktur miteinander verbunden werden. Der hier gewählte Begriff der Wellenform bzw. Wellstruktur umfasst Wellen mit gerundetem, beispielsweise sinusförmigem Querschnitt, aber auch solche mit eckigem, beispielsweise dreieckigem, rechteckigem oder trapezförmigem Querschnitt. Es kann jede geeignete, auch unregelmäßige Wellenform vorgesehen sein, die durch einen auf und ab führenden Verlauf die Querschnitte der Gaskanäle formt. Es entsteht ein zweischichtiges, einseitig gewelltes Halbzeug. Dieses kann mit hoher Produktivität als Endlosware hergestellt, auf Länge geschnitten und zu einem Filterkörper aufgewickelt bzw. gestapelt werden. Die Wellstruktur erlaubt vielfältige Formgebungen. So sind neben Gaskanälen mit konstantem Querschnitt auch solche mit sich erweiterndem oder verjüngendem Querschnitt möglich.

In bevorzugter Weiterbildung erfolgt die räumliche Formung der mindestens einen Faserbahn unter stabilisierender Wärmeeinwirkung insbesondere mittels einer temperierten gewellten Walze. Dies führt zu einem leichten Antrocknen der welligen Lage, um diese in der vorgesehenen Form zu stabilisieren.

Bedarfsweise kann es zweckmäßig sein, zwischen die beiden benachbarten Faserbahnen mindestens eine Raupe aus keramischem Material zur Bildung von Verschlussstopfen für die Gaskanäle aufzubringen. Beim Zusammenfügen bzw. Zusammenpressen der beiden benachbarten Faserbahnen und deren Kontaktierung an den Kontaktlinien drückt sich das plastisch verformbare, weiche Material der keramischen Raupe fest an die Oberfläche der Faserbahn und sorgt für eine zuverlässige Abdichtung der Gaskanäle. Beim anschließenden Sintern wird das keramische Material der Raupe gemeinsam mit der keramischen Imprägnierung der Faserbahnen zusammengesintert, wodurch ein monolithischer Formkörper entsteht. Nacharbeiten durch nachträgliches Einbringen von Verschlussstopfen sind nicht erforderlich.

Das Halbzeug wird vorteilhaft im feuchten Zustand in die Form des Filterkörpers insbesondere durch Aufwickeln gebracht, anschließend getrocknet und schließlich gesintert. Die Formgebung im feuchten Zustand vor dem Trocknen vermeidet eine Rissbildung im Faser- und Keramikmaterial. Die vorgenommene Formgebung wird durch den anschließenden Trocknungsprozess stabilisiert.

### Kurze Beschreibung der Zeichnungen

Ein Ausführungsbeispiel der Erfindung ist nachfolgend anhand der Zeichnung näher beschrieben. Es zeigen.
- Figur 1: in schematischer Perspektivdarstellung einen nach dem erfindungsgemäßen Verfahren hergestellten keramischen Filterkörper aus keramisch imprägnierten, gewickelten Faser- bahnen,
- Figur 2: eine schematische Längsschnittdarstellung zweier benach- barter Gaskanäle mit einer zwischenliegenden Öffnung für einen ungehinderten Gasaustausch,
- Figur 3: eine Schemadarstellung einer Walz- und Rakelanlage zur Imprägnierung von Faserbahnen mit Keramikmaterial sowie zur Formgebung und Fügung zu einem Halbzeug,
- Figur 4: eine vergrößerte Schemadarstellung des Halbzeuges nach Figur 3 mit im Querschnitt veränderlichen Gaskanälen und mit Einzelheiten zur Verbindung einer gewellten und einer glatten imprägnierten Faserbahn zur Bildung der Gaskanäle,
- Figur 5: eine schematische Perspektivdarstellung einer mit der Anord- nung nach Figur 3 teilweise imprägnierten, mit Ausschnitten versehenen Faserbahn.

### Ausführungsform(en) der Erfindung

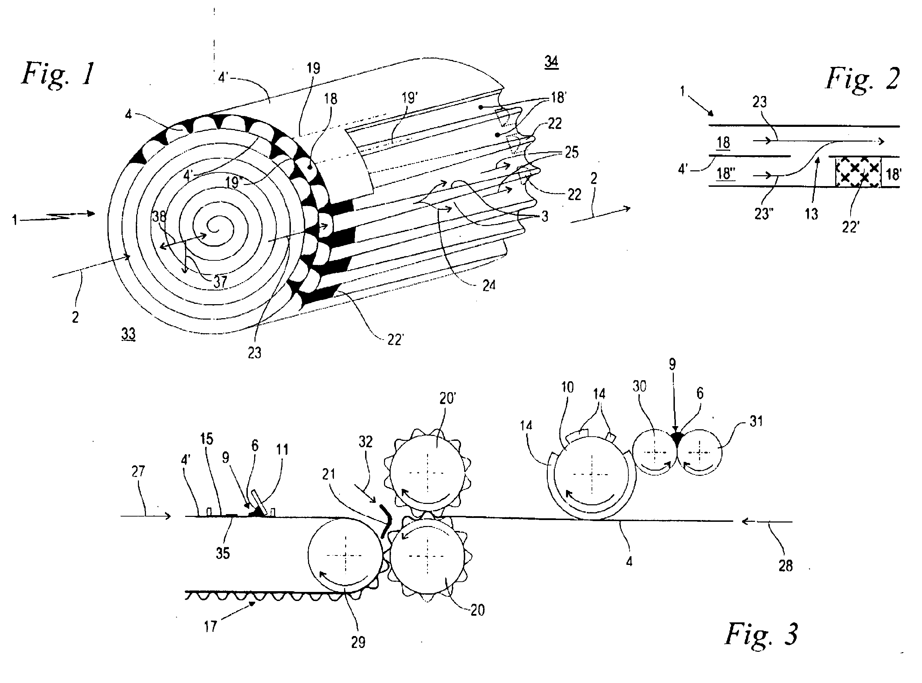

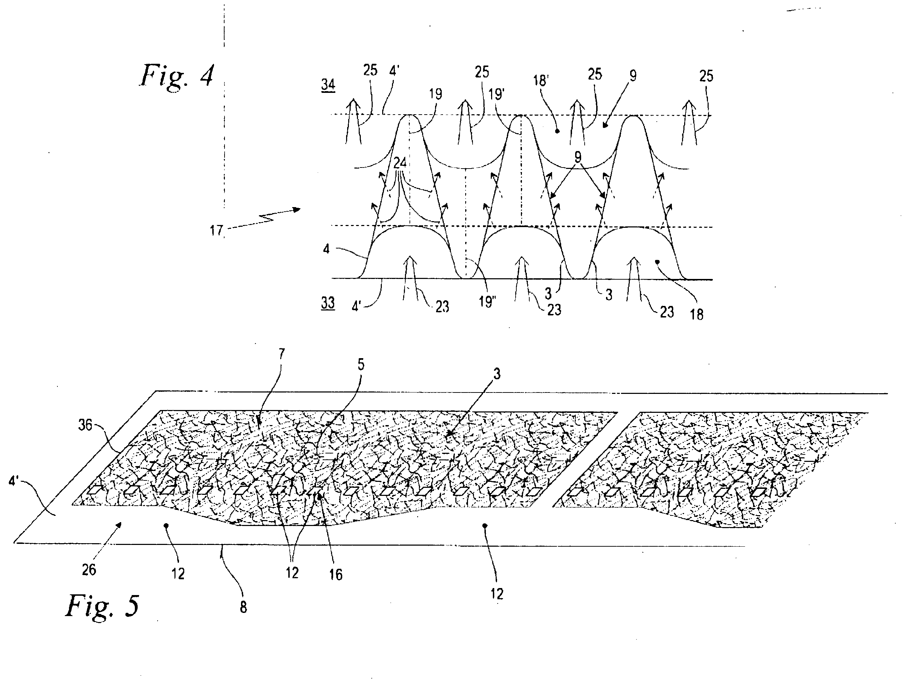

Figur 1 zeigt in schematischer, teilweise geschnittener Perspektivdarstellung einen erfindungsgemäßen keramischen Filterkörper 1. Der Filterkörper 1 ist Teil eines nicht näher dargestellten Dieselpartikelfilters und zur Filtrierung eines Abgasstromes 2 eines Dieselmotors vorgesehen. Der Filterkörper 1 ist durch weiter unten im Zusammenhang mit den Figuren 3 bis 5 näher beschriebene, keramisch imprägnierten Faserbahnen 4, 4' gebildet. Die Faserbahnen 4, 4' sind entsprechend der Darstellung nach den Figuren 3 und 4 zu einem Halbzeug 17 zusammengefügt, welches zu dem näherungsweise zylindrisch ausgeführten Filterkörper 1 aufgewickelt ist. Durch das Aufwickeln der keramisch imprägnierten Faserbahnen 4, 4' zu einem Wickelkörper entsteht eine Schichtungsrichtung, die zu einer Radialrichtung 37 des zylindrischen Filterkörpers 1 identisch ist. Alternativ kann es auch zweckmäßig sein, mehrere gewellte Faserbahnen 4 bzw. Halbzeuge 17 (Figuren 3 und 4) in einer Ebene anzuordnen und stapelartig übereinanderzuschichten.

Es ist eine Durchströmung des Filterkörpers 1 vom Abgasstrom 2 in einer Axialrichtung 38 des Filterkörpers 1 von einer Einströmseite 33 zu einer Ausströmseite 34 vorgesehen. Dazu ist die erste Faserbahn 4 gewellt ausgeführt, während eine zweite Faserbahn 4' im Wesentlichen glatt ist. Der hier gewählte Begriff der Wellenform umfasst Wellen mit gerundetem, beispielsweise sinusförmigem Querschnitt, aber auch solche mit eckigem, beispielsweise dreieckigem, rechteckigem oder trapezförmigem Querschnitt. In Folge der Stapelung bzw. Wickelstruktur liegen bezogen auf eine radiale Richtung 37 des Filterkörpers 1 abwechselnd eine gewellte Faserbahn 4 und eine glatte Faserbahn 4' übereinander. Die gewellte Faserbahn 4 ist mit der zweiten, glatten Faserbahn 4' entlang von einer Vielzahl zumindest näherungsweise parallel verlaufender Kontaktlinien 19, 19', 19" verbunden. Durch die Wellenform der Faserbahn 4, die glatte Form der weiteren Faserbahn 4' und die Wickelstruktur entsteht eine Vielzahl von zumindest näherungsweise achsparallel verlaufenden Gaskanälen 18, 18' mit entlang der Axialrichtung 38 konstanter, in der Radialrichtung 37 gemessener Höhe. In Umfangsrichtung des Filterkörpers 1 sind abwechselnd je ein Gaskanal 18 und ein Gaskanal 18' vorgesehen. Die Gaskanäle 18 sind zur Einströmseite 33 hin offen und in gegenüberliegender Richtung zur Ausströmseite 34 hin mittels Verschlussstopfen 22 verschlossen. Bezogen auf die Umfangsrichtung liegt zwischen zwei Gaskanälen 18 je ein Gaskanal 18', der zur Einströmseite 33 hin mittels eines Verschlussstopfens 22' verschlossen und zur Ausströmseite 34 hin offen ist. Im Betrieb strömt der Abgasstrom 2 entsprechend einem Pfeil 23 achsparallel in die zur Einströmseite 33 hin offenen Gaskanäle 18 ein. Seitenwände der durch die gewellte Faserbahn 4 hergestellten keramischen Struktur bilden flächige und poröse Filterabschnitte 3. Der an den Verschlussstopfen 22 aufgestaute Abgasstrom 2 wird in Umfangsrichtung entsprechend Pfeilen 24 abgelenkt und durchströmt die porösen keramischen Filterabschnitte 3 quer zu ihrer Fläche. Entsprechend den Pfeilen 24 tritt der Abgasstrom 2 durch die Filterabschnitte 3 hindurch in die zur Ausströmseite 34 hin offenen Kanäle 18 ein und strömt aus ihnen entsprechend Pfeilen 25 aus. Beim Durchtritt durch die porösen Filterabschnitte 3 wird der Abgasstrom 2 von mitgeführten Rußpartikeln oder dgl. gereinigt.

Für bestimmte Anwendungsfälle kann es zweckmäßig sein, in den durch die glatte Faserbahn 4' gebildeten Filterbereich Öffnungen 13 einzubringen, deren Herstellung weiter unten beschrieben wird. Der schematischen Längsschnittdarstellung nach Fig. 2 ist hierzu zu entnehmen, dass eine solche Öffnung 13 beispielsweise stromauf eines Verschlussstopfens 22' angeordnet ist. Der eingangsseitige Gaskanal 18 ist durchgängig am Verschlussstopfen 22' vorbeigeführt. Die benachbart angrenzende Kanalstruktur ist durch den Verschlussstopfen 22' in den ausgangsseitigen Gaskanal 18' und einen eingangsseitigen Kanalabschnitt 18" aufgeteilt. Der Abgasstrom 2 (Fig. 1) kann stromauf des Verschlussstopfens 22' unter Ausnutzung des Strömungsquerschnittes der Gaskanäle 18 und der Kanalabschnifte 18" in den Filterkörper 1 einströmen. In diesem Bereich kann beispielsweise eine katalytische Beschichtung unter Ausnutzung des gesamten Strömungsquerschnitts vorgesehen sein. Stromauf des Verschlussstopfens 22' wird das Abgas entsprechend einem Pfeil 23" durch die Öffnung 13 in den eingangsseitigen Gaskanal 18 umgeleitet. Dort vereinigt er sich mit dem Gasstrom nach Pfeil 23, woraus sich die vorstehend beschriebene Filtrierfunktion ergibt. Analog dazu können auch Öffnungen 13 stromab der Verschlussstopfen 22 (Fig. 1) vorgesehen sein.

Ebenso kann es vorteilhaft sein, solche Öffnungen 13 auch in dem durch die gewellte Faserbahn 4 gebildeten Filterbereich vorzusehen. Eine weitere vorteilhafte Möglichkeit besteht darin, neben der in Fig. 1 gezeigten Durchströmung in der Axialrichtung 38 und der Umfangsrichtung auch eine Durchströmung in der Radialrichtung 37 zuzulassen. In diesem Falle sind auch die durch die glatte Faserbahn 4' gebildeten Filterbereiche porös ausgeführt und bilden in radialer Richtung durchströmte Filterabschnitte.

Figur 3 zeigt eine schematische Darstellung einer Vorrichtung zur Herstellung des erfindungsgemäßen Filterkörpers 1 (Figur 1). Zwei Beschickungswalzen 30, 31 der Vorrichtung sind achsparallel zueinander angeordnet und liegen bündig nebeneinander. Sie drehen sich gegenläufig, wobei in einem keilförmigen Zwischenraum oberhalb ihrer Berührlinie ein Keramikmaterial 6 bevorratet ist. Das Keramikmaterial 6 kann ein trockenes Pulver aus feingemahlener Keramik sein, welches für eine Trockenimprägnierung der Faserbahn 4 vorgesehen ist. Im gezeigten Ausführungsbeispiel ist mit dem Keramikmaterial 6 eine wässrige Emulsion 9 hergestellt. Anstelle von Wasser kann auch eine andere geeignete Flüssigkeit oder ein Flüssigkeitsgemisch zweckmäßig sein. Als Keramikmaterial 6 kommt bevorzugt Aluminiumoxid, Cordierit, Mullit, Sliciumcarbid und/ oder Aluminiumtitanat jeweils für sich alleine oder auch in verschiedenen Kombinationen miteinander in Betracht. Eine weitere Walze 10 ist achsparallel zur Beschickungswalze 30 angeordnet und berührt diese entlang zeine Berührlinie. Die Beschickungswalze 30 trägt infolge ihrer durch einen Pfeil angegebenen Drehung die keramische Emulsion 9 zur Walze 10 und rollt die keramische Emulsion 9 auf die Oberfläche der Walze 10 auf. Mittels der Walze 10 wird das Keramikmaterial 6 in das Material der unterhalb in Richtung eines Pfeils 28 entlang geführten Faserbahn 4 eingewalzt. Hierzu liegt die Walze 10 mit Anpressdruck auf der Faserbahn 4 auf. Es wird ein Tränken der Faserbahn 4 mit der Emulsion 9 durchgeführt. Die flächige, durchlässige Faserbahn 4 nimmt dabei das feingemahlene Keramikmaterial 6 innerhalb ihres gesamten Querschnitts auf.

Die endlose Faserbahn 4 durchläuft anschließend in Richtung des Pfeils 28 zwei achsparallel zueinander angeordnete, ineinander kämmende gewellte Walzen 20, 20', wodurch die mit dem Keramikmaterial 6 imprägnierte Faserbahn 4 eine gewellte Form erhält. Die Wellen der gewellten Walzen 20, 20' sind wechselseitig etwa konisch ausgeführt, wodurch auch die Wellen der Faserbahn 4 entsprechend der Darstellung nach Fig. 4 wechselseitig konisch, d.h. mit in der Durchströmungsrichtung sich erweiterndem bzw. verengendem Querschnitt geformt werden. Die beiden gewellten Walzen 20, 20' sind temperiert. Dies führt zu einem leichten Antrocknen, jedoch nicht vollständigen Durchtrocknen der gewellten, mit der Emulsion 9 getränkten Faserbahn 4, wodurch die Wellenform stabilisiert wird.

Eine weitere Faserbahn 4' wird in entgegengesetzter Richtung entsprechend einem Pfeil 27 de gezeigten Vorrichtung zugeführt und läuft um eine Andruckwalze 29 um. Bezogen auf die durch den Pfeil 27 angegebene Bewegungsrichtung liegt vor der Andruckwalze 29 ein Sieb 15 auf der Faserbahn 4' auf. Oberhalb des Siebes 15 ist auf diesem ebenfalls eine wässrige Emulsion 9 mit dem Keramikmaterial 6 bevorratet. Die Emulsion 9 wird mittels einer Rakel 11 unter Druck durch das Sieb hindurch in das Material der Faserbahn 4' hineingestrichen, wodurch eine Tränkung der Faserbahn 4' mit der Emulsion 9 erfolgt. Alternativ kann auch eine Trockenimprägnierung der Faserbahn 4' mit dem Keramikmaterial 6 erfolgen. Auch kann es zweckmäßig sein, eine Imprägnierung der Faserbahn 4' mit einer Walzenanordnung 10, 30, 31 entsprechend der gegenüberliegenden Faserbahn 4 vorzunehmen. Auch für die gewellte Faserbahn 4 kann eine Imprägnierung mittels eines Siebes 15 und einer Rakel 11 zweckmäßig sein.

Die Andruckwalze 29 liegt an der unteren gewellten Walze 20 an. Infolge der gegenläufigen Drehung der Andruckwalze 29 und der gewellten Walze 20 werden die glatte Faserbahn 4' und die gewellte Faserbahn 4 aneinander angedrückt und miteinander verbunden. In Durchlaufrichtung hinter der Walzenanordnung 29, 20 entsteht ein in Figur 4 näher dargestelltes Halbzeug 17.

Figur 4 zeigt eine vergrößerte, schematische Ausschnittsdarstellung des Halbzeuges 17 nach Figur 3. Die gewellte Faserbahn 4 liegt an ihren Wellenbergen entlang von Kontaktlinien 19, 19' an der gestrichelt angedeuteten, darüber liegenden glatten Faserbahn 4' an und ist entlang der Kontaktlinien 19, 19' mit ihr verbunden. Die Verbindung kann durch einen geeigneten Leim erfolgen. Im gezeigten Ausführungsbeispiel ist die Verbindung durch die keramische Emulsion 9 in den Faserbahnen 4, 4' hergestellt. Es kann auch zweckmäßig sein, entlang der Kontaktlinien 19, 19' zusätzliche keramische Emulsion 9, ggf. in angedickter Form aufzutragen, um eine Verbindung der beiden Faserbahnen 4, 4' zu erreichen. Im verbundenen Zustand des Halbzeuges 17 sind durch die Wellstruktur der Faserbahn 4 und die glatte Form der Faserbahn 4' die späteren Gaskanäle 18, 18' vorgeformt, wobei Seitenwände der gewellten Faserbahn 4 für die Bildung der späteren Filterabschnitte 3 vorgesehen sind.

Das mit der keramischen Emulsion 9 getränkte Halbzeug 17 wird in feuchtem Zustand, also bei noch nicht durchgetrockneter Emulsion 9, in die Form des späteren Filterkörpers 1 nach Figur 1 aufgewickelt oder auch gestapelt und anschließend getrocknet. Beim Aufwickeln bzw. Stapeln werden Wellentäler der gewellten Faserbahn 4 entlang von Kontaktlinien 19" mit der darunter liegenden glatten Faserbahn 4' verbunden, wodurch neben den Gaskanälen 18 auch die weiteren Gaskanäle 18' in radialer Richtung und in Umfangsrichtung des etwa zylindrischen Filterkörpers 1 (Figur 1) geschlossen sind. Die Verbindung an den Kontaktlinien 19" erfolgt in gleicher Weise wie an den Kontaktlinien 19, 19'.

Der auf diese Weise gebildete Filterrohling wird nach dem Trocknungsprozess in einem Sinterofen unter Einwirkung von Temperatur gesintert, wobei das Keramikmaterial 6 zu einem monolithischen Keramikkörper zusammengesintert wird. Bei der hohen Sintertemperatur verbrennt das Material der Faserbahnen 4, 4', wodurch eine bestimmte Porosität des Keramikmaterials 6 erreicht wird. Die Porosität ist derart ausgebildet, dass der Abgasstrom 2 (Figur 1) quer zur Fläche der keramischen Filterabschnitte 3 durch diese hindurchströmen kann.

Der Querschnitt der Gaskanäle 18, 18' verändert sich entlang der Axialrichtung 38, und zwar verengen sich die Querschnitte der eingangsseitigen Gaskanäle 18 von der Einströmseite 33 zur Ausströmseite 34 hin. Umgekehrt erweitern sich die Querschnitte der ausgangsseitigen Gaskanäle 18' von der Einströmseite 33 zur Ausströmseite 34 hin, wobei jedoch bei sämtlichen Gaskanälen 18, 18' die Kanalhöhe konstant bleibt. Dies wird erreicht durch eine Wellenform der Faserbahn 4 mit an der Einströmseite 33 breiten und an der Ausströmseite 34 schmalen Wellenbergen. Im gezeigten Ausführungsbeispiel nimmt die Breite der Wellenberge von der Einströmseite 33 zur Ausströmseite 34 hin linear ab. In Folge der konstanten Kanalhöhe und einer eindimensionalen, etwa konischen Krümmung der Faserbahn 4 ist auch der Querschnittsverlauf etwa linear. Es kann aber auch ein abweichender, nichtlinearer Verlauf insbesondere durch mehrdimensionale räumliche Krümmung der Faserbahn 4 zweckmäßig sein. Alternativ kann es auch eine Ausgestaltung der Wellen vorteilhaft sein, bei der die Gaskanäle 18, 18' von der Einströmseite 33 zur Ausströmseite 34 hin einen konstanten Querschnitt aufweisen.

Der entlang von Pfeilen 23 in die Gaskanäle 18 eintretende Abgasstrom 2 (Fig. 1) dringt entlang der gesamten Lauflänge der Gaskanäle 18, 18' durch die Filterabschnitte 3 entsprechend Pfeilen 24 hindurch. Dadurch verringert sich der eingangsseitige Volumenstrom 23 im Gaskanal 18 entlang dessen Lauflänge, während sich der ausgangsseitige Volumenstrom 25 im Gaskanal 18' entlang dessen Lauflänge vergrößert. Der vorstehend beschriebene Querschnittsverlauf der Gaskanäle 18, 18' führt dazu, dass die Strömungsgeschwindigkeit innerhalb der Gaskanäle 18, 18' sowie die über die Filterabschnitte 3 gemessene Druckdifferenz zwischen den Gaskanälen 18, 18' entlang deren Lauflänge zumindest näherungsweise konstant sind. Die Filtrierbelastung der Filterabschnitte 3 ist dadurch entlang der Lauflänge der Gaskanäle 18, 18' zumindest näherungsweise konstant. In den übrigen Merkmalen und Bezugszeichen stimmt das Ausführungsbeispiel nach Figur 4 mit demjenigen nach Figur 1 überein.

Figur 5 zeigt in perspektivischer Schemadarstellung die endlose Faserbahn 4'. Das nachfolgend Beschriebene gilt sinngemäß auch für die weitere Faserbahn 4 (Figur 3). Die Faserbahnen 4, 4' bestehen aus Fasern 5. Hierzu kann ein Filz, ein textiles Gewebe oder Gewirke vorgesehen sein. Bevorzugt ist ein offenes, durchlässiges Filterpapier gewählt. Die Faserbahn 4' ist flächig und durchlässig in dem Sinne, dass das feingemahlene Keramikmaterial 6 (Figur 3) zwischen Fasern 5 der Faserbahn 4 eindringen kann. Die Durchlässigkeit der Faserbahn 4 und der Imprägnierungsprozess nach Figur 3 sind derart aufeinander abgestimmt, dass ein Teil der Fasern 5 nach dem Imprägnieren mit dem Keramikmaterial 6 (Figur 3) an beiden gegenüberliegenden Oberflächen 7, 8 der Faserbahn 4 frei liegen. Dies führt beim Freibrennen der Fasern 5 während des Sinterprozesses dazu, dass der gesinterte keramische Filterabschnitt 3 durchgängig von einer Oberfläche 7 bis zur gegenüberliegenden Oberfläche 8 porös und damit quer zur Fläche des Filterabschnittes 3 gasdurchlässig für den Abgasstrom 2 (Figur 1) ist.

Für bestimmte Anwendungsfälle kann es zweckmäßig sein, zumindest abschnittsweise eine verringerte Porosität und damit zumindest näherungsweise eine Gasdichtigkeit herbeizuführen. Beispielsweise kann der Filterkörper 1 (Figur 1) im Bereich der glatten Faserbahn 4' eine derart geringe Porosität aufweise, dass er im technischen Sinne des Filtriervorganges praktisch gasundurchlässig ist, während eine spürbare Gasdurchlässigkeit nur im Bereich der gewellten Faserbahn 4 gewünscht wird. In diesem Falle erfolgt neben der tränkenden Imprägnierung der Faserbahn 4' auch eine geschlossene Oberflächenbeschichtung mit dem Keramikmaterial 6 (Figur 3) an zumindest einer der beiden Oberflächen 7, 8, ohne dass dort die Fasern 5 freiliegen. In diesem Falle entsteht beim Sintern ein geschlossener Keramikkörpe, der im Bereich der Oberfläche 7, 8 kaum porös und damit im technischen Sinne gasundurchlässig ist. Die Einstellung der Gasdurchlässigkeit bzw. Gasdichtigkeit kann auch durch entsprechende Einstellung des Keramikmaterials 6 herbeigeführt bzw. unterstützt werden.

Es kann zweckmäßig sein, die Faserbahnen 4, 4' als unbeschnittenes Endlosmaterial vollflächig mit dem Keramikmaterial 6 (Figur 3) zu imprägnieren. Nicht imprägnierte Abschnitte 12 können dabei beispielsweise durch Ausstanzung von Ausschnitten 16 zur späteren Bildung von Öffnungen 13 (Fig. 2) oder durch eine Beschneidung eines begrenzten Flächengebildes 36 an dessen Randbereich 26 gebildet werden. Im gezeigten Ausführungsbeispiel nach Figur 5 sind nicht imprägnierte Abschnitte 12 vorgesehen, die selektiv von einer Imprägnierung mit dem Keramikmaterial 6 ausgenommen werden. Ein Teil der nicht imprägnierten Abschnitte 12 wird zur späteren Bildung der Öffnungen 13 (Figur 2) von der Imprägnierung ausgenommen. Ein weiterer nicht imprägnierter Abschnitt 12 ist durch den Randbereich 26 gebildet, der das begrenzte Flächengebilde 36 umgibt. Das begrenzte Flächengebilde 36 weist die Kontur auf, die zum Wickeln des Filterkörpers 1 nach Figur 1 erforderlich ist. Das Flächengebilde 36 kann durch Beschneiden der Faserbahn 4 insbesondere durch Ausstanzen der Umfangskontur des Flächengebildes 36 sowie durch Ausstanzen der Ausschnitte 16 hergestellt werden. Es kann auch zweckmäßig sein, auf ein Ausstanzen der Ausschnitte 16 zu verzichten und lediglich die zugehörigen Abschnitte 12 von der Imprägnierung mit dem Keramikmaterial 6 (Figur 3) auszunehmen. Dies erfolgt in weiter unten näher beschriebener Weise. Die nur abschnittsweise imprägnierte und/ oder beschnittenen Faserbahnen 4, 4' werden in vorstehend beschriebener Weise zu dem Halbzeug 17 gefügt, welches anschließend zu einem Rohling des Filterkörpers 1 nach Fig. 1 geformt wird. Die imprägnierten Bereiche der Faserbahnen 4, 4' nehmen dabei die Gestalt des zu bildenden Filterkörpers 1 (Fig. 1, 2) an. Beim abschließenden Sinterprozess verbrennen dann die nicht beschnittenen und nicht imprägnierten Abschnitte 12 vollständig und hinterlassen den Filterkörper 1 in seiner nach den Fig. 1 und 2 vorgesehenen Form einschließlich der Öffnungen 13 (Figur 2).

Der Darstellung nach Figur 3 ist zu entnehmen, dass die Walze 10 eine Oberflächenstrukturierung 14 aufweist. Diese entspricht in ihrer Form der Kontur des Flächengebildes 36 nach Figur 4. Die keramische Emulsion 9 wird nur durch die erhabenen Flächen der Oberflächenstrukturierung 14 unter Druck in die Faserbahn 4 eingewalzt. In zwischenliegenden, in radialer Richtung zurückversetzten Bereichen der Oberflächenstrukturierung 14 kann keine Imprägnierung mit dem Keramikmaterial 6 erfolgen, so dass die Faserbahn 4 analog zur Faserbahn 4' nach Figur 5 nur teilweise und unter Bildung der nicht imprägnierten Abschnitte 12 mit dem Keramikmaterial 6 imprägniert wird.

Eine alternative Form der Herstellung von nicht imprägnierten Abschnitten 12 in der Faserbahn 4' ergibt sich aus der Darstellung nach Figur 3 im Bereich des Siebes 15. Das Sieb 15 ist vergleichbar zum Siebdruckverfahren mit schematisch angedeuteten Abdeckungen 35 versehen. Die Abdeckungen 35 entsprechen in ihrer Kontur der Form der nicht imprägnierten Abschnitte 12 nach Figur 5. Beim Aufstreichen der keramischen Emulsion 9 unter Druck mittels der Rakel 11 verhindern die Abdeckungen 35, ggf. auch die Ausstanzungen bzw. Ausschnitte 16 (Fig. 5) partiell eine Tränkung und bilden die nicht imprägnierten Abschnitte 12.

Der Darstellung nach Figur 3 ist noch zu entnehmen, dass vor der Zusammenfügung der beiden Faserbahnen 4, 4' Raupen 21 aus keramischem Material auf die gewellte Faserbahn 4 entsprechend einem Pfeil 32 aufgebracht werden. Die keramischen Raupen 21 werden zwischen den beiden Faserbahnen 4, 4' eingequetscht und bilden später die Verschlussstopfen 22, 22' nach Figur 1. Für die wechselseitige Anordnung der Verschlussstopfen 22, 22' nach Figur 1 kann es zweckmäßig sein, die Raupen 21 unterbrochen aufzubringen. Für bestimmte Anwendungsfälle kann es auch zweckmäßig sein, die Verschlussstopfen 22, 22' in Umfangsrichtung durchgängig anzuordnen, wobei dann auch die zugeordneten Raupen 21 durchgängig aufgebracht werden. Die Raupen 21 bestehen aus einem feuchten, weichen keramischen Material und werden gemeinsam mit den Faserbahnen 4, 4' getrocknet und anschließend gesintert, wodurch ein monolithischer, keramischer Filterkörper 1 nach Figur 1 entsteht.

Im gezeigten Ausführungsbeispiel erfolgt zunächst eine Imprägnierung der Faserbahnen 4, 4' mit dem Keramikmaterial 6 (Figur 3) und anschließend die Formgebung mit der Wellstruktur der Faserbahn 4, die Zusammenfügung zum Halbzeug 17 und Aufwickeln zum Rohling des Filterkörpers 1 nach Figur 1. Dieser Rohling wird anschließend getrocknet und schließlich gesintert. Es kann auch zweckmäßig sein, den Rohling des Filterkörpers 1 nach Figur 1 zunächst aus nicht imprägnierten Faserbahnen 4, 4' in vorgenannter Weise zu beschneiden und zu formen und erst anschließend beispielsweise in einem Tauchbad mit dem Keramikmaterial 6 (Figur 3) zu tränken. Daran schließen sich dann ein Trocknungsprozess und schließlich der Sinterprozess an.

## Patentansprüche

1. Verfahren zur Herstellung eines keramischen Filterkörpers (1) zur Filtrierung eines Abgasstromes (2) eines Dieselmotors, wobei der Filterkörper (1) flächige und poröse Filterabschnitte (3) aufweist, die zur Durchströmung mit dem Abgasstrom (2) quer zur Fläche der Filterabschnitte (3) vorgesehen sind, umfassend folgende Verfahrensschritte:
eine flächige, durchlässige Faserbahn (4, 4') insbesondere aus Filterpapier wird zunächst mit fein gemahlenem Keramikmaterial (6) unter Bildung mindestens eines nicht imprägnierten Abschnittes (12) imprägniert;
die nur teilweise keramisch imprägnierte Faserbahn (4, 4') wird daraufhin in die Form eines Rohlings des Filterkörpers (1) derart gebracht, dass die imprägnierten Bereiche der Faserbahn (4,4') die Form des Filterkörpers (1) einnehmen;
die mit dem Keramikmaterial (6) imprägnierte und geformte Faserbahn (4, 4') wird anschließend derart unter Temperatur gesintert, dass die Fasern (5) der Faserbahn freibrennen und das Keramikmaterial (6) unter Bildung des Filterkörpers (1) mit den durchgängig zwischen ihren beiden Oberflächen (7, 8) porösen und gasdurchlässigen Filterabschnitten (3) zusammensintert.

2. Verfahren nach Anspruch 1, **dadurch gekennzeichnet, dass** mindestens ein einzelner Abschnitt (12) der Faserbahn (4) zur späteren Bildung einer Öffnung (13) im Filterkörper (1) von der Imprägnierung ausgenommen wird.

3. Verfahren nach Anspruch 1 oder 2, **dadurch gekennzeichnet, dass** die Imprägnierung unter Einwirkung von Druck insbesondere mittels einer Walze (10) oder eines Rakels (11) erfolgt.

4. Verfahren nach Anspruch 3, **dadurch gekennzeichnet, dass** die Bildung des nicht imprägnierten Abschnittes (12) durch teilweise Imprägnierung mittels einer Walze (10) mit einer Oberflächenstrukturierung (14) erfolgt.

5. Verfahren nach Anspruch 3, **dadurch gekennzeichnet, dass** die Bildung des nicht imprägnierten Abschnittes (12) durch teilweise Imprägnierung mittels eines teilweise abgedeckten Siebes (15) zwischen der Faserbahn (4) und dem Rakel (11) erfolgt.

6. Verfahren nach einem der Ansprüche 1 bis 5, **dadurch gekennzeichnet, dass** zur Bildung des nicht imprägnierten Abschnittes (12), insbesondere der Öffnung (13) ein Ausschnitt (16, 16') in die Faserbahn (4) eingebracht bzw. die Faserbahn (4) beschnitten wird.

7. Verfahren nach einem der Ansprüche 1 bis 6, **dadurch gekennzeichnet, dass** die flächige, durchlässige Faserbahn (4) derart mit dem Keramikmaterial (6) imprägniert wird, dass ein Teil von Fasern (5) der Faserbahn (4) an beiden Oberflächen (7, 8) frei liegt.

8. Verfahren nach einem der Ansprüche 1 bis 7, **dadurch gekennzeichnet, dass** zur Bildung eines Halbzeuges (17) mit Gaskanälen (18) zwei Faserbahnen (4, 4') entlang mehrerer Kontaktlinien (19) miteinander verbunden werden, wobei mindestens eine Faserbahn (4) zwischen zwei benachbarten Kontaktlinien (19, 19') räumlich geformt wird.

9. Verfahren nach Anspruch 8, **dadurch gekennzeichnet, dass** die erste Faserbahn (4) mit Wellstruktur und die zweite Faserbahn (4') glatt hergestellt wird, wobei die beiden Faserbahnen (4, 4') zur Bildung der Gaskanäle (18) an Wellenbergen der Wellstruktur miteinander verbunden werden.

10. Verfahren nach Anspruch 8 oder 9, **dadurch gekennzeichnet, dass** die räumliche Formung der mindestens einen Faserbahn (4) unter stabilisierender Wärmeeinwirkung insbesondere mittels einer temperierten gewellten Walze (20, 20') erfolgt.

11. Verfahren nach einem der Ansprüche 8 bis 10, **dadurch gekennzeichnet, dass** zwischen die beiden benachbarten Faserbahnen (4, 4') mindestens eine Raupe (21) aus keramischem Material zur Bildung von Verschlussstopfen (22, 22') für die Gaskanäle (18, 18') aufgebracht wird.

12. Verfahren nach einem der Ansprüche 8 bis 11, **dadurch gekennzeichnet, dass** das Halbzeug (17) im feuchten Zustand in die Form des Rohlings des Filterkörpers (1) insbesondere durch aufwickeln oder stapeln gebracht, anschließend getrocknet und schließlich gesintert wird.

## Claims

1. Method for manufacturing a ceramic filter body (1) for filtering an exhaust-gas flow (2) of a diesel engine, the filter body (1) featuring plane and porous filter sections (3) which are provided to be flowed through by the exhaust-gas flow (2) transversely to the surface of the filter sections (3), comprising the following process steps:
a plane, permeable fiber web (4, 4') made especially of filter paper is initially impregnated with finely ground ceramic material (6) by forming at least one non-impregnated section (12);
the only partially ceramic impregnated fiber web (4, 4') is then brought into the form of a blank of the filter body (1) in such a way that the impregnated sections of the fiber web (4, 4') take the shape of the filter body (1);
the fiber web (4, 4') impregnated and formed by means of the ceramic material (6) is then sintered under temperature in such a way that the fibers (5) of the fiber web disappear by combustion and the ceramic material (6) is sintered with the porous and gas-permeable filter sections (3) in a continuous manner between their two surfaces (7, 8) by forming the filter body (1).

2. Method according to claim 1, **characterized in that** at least one single section (12) of the fiber web (4) is not impregnated to allow the subsequent formation of an aperture (13) in the filter body.

3. Method according to claim 1 or 2, **characterized in that** the impregnation is realized under pressure, in particular by means of a roller (10) or a doctor blade (11).

4. Method according to claim 3, **characterized in that** the non-impregnated section (12) is formed by partial impregnation by means of a roller (10) having a surface structure.

5. Method according to claim 3, **characterized in that** the non-impregnated section (12) is formed by partial impregnation by means of a partially covered screen (15) between the fiber web (4) and the doctor blade (11).

6. Method according to one of the claims 1 to 5, **characterized in that** for forming the non-impregnated section (12), in particular the aperture (13), a cutout (16, 16') is realized in the fiber web (4) or the fiber web (4) is trimmed.

7. Method according to one of the claims 1 to 6, **characterized in that** the plane, permeable fiber web (4) is impregnated with the ceramic material (6) in such a way that one part of the fibers (5) of the fiber web (4) is exposed on both surfaces (7, 8).

8. Method according to one of the claims 1 to 7, **characterized in that** for forming a semi-finished product (17) with gas channels (18) two fiber webs (4, 4') are connected with each other along several contact lines (19), at least one fiber web (4) being shaped spatially between two adjacent contact lines (19, 19').

9. Method according to claim 8, **characterized in that** the first fiber web (4) realized with corrugation structure and the second fiber web (4') is straight, both fiber webs (4, 4') being connected with each other at the corrugation peaks of the corrugation structure for forming the gas channels (18).

10. Method according to claim 8 or 9, **characterized in that** the spatial shaping of the at least one fiber web (4) is realized under stabilizing thermal effect, in particular by means of a tempered corrugated roller (20, 20').

11. Method according to one of the claims 8 to 10, **characterized in that** between both adjacent fiber webs (4, 4') at least one bead (21) made of ceramic material for shaping plugs (22, 22') for the gas channels (18, 18') is applied.

12. Method according to one of the claims 8 to 11, **characterized in that** the semi-finished product (17) in wet state forms the blank of the filter body (1), in particular by winding or piling up, and is then dried and finally sintered.

## Revendications

1. Procédé de fabrication d'un corps de filtre (1) en céramique pour filtrer un flux de gaz d'échappement (2) d'un moteur diesel, le corps de filtre (1) présentant des sections de filtre (3) poreuses et plates qui sont prévues pour être traversées par le flux de gaz d'échappement (2) transversalement à la surface des sections de filtre (3), comprenant les étapes suivantes :
une bande fibreuse (4, 4') plate et perméable, en particulier en papier filtre, est d'abord imprégnée d'un matériau céramique (6) finement broyé en formant au moins une section (12) non imprégnée ;
la bande fibreuse (4, 4') imprégnée seulement partiellement de céramique est ensuite mise à la forme d'une ébauche du corps de filtre (1), de telle manière que les zones imprégnées de la bande fibreuse (4, 4') prennent la forme du corps de filtre (1) ;
la bande fibreuse (4, 4') imprégnée de matériau céramique (6) et mise en forme est ensuite frittée sous température de telle manière que les fibres (5) de la bande fibreuse disparaissent par combustion et le matériau céramique (6) fritte en formant le corps filtrant (1) avec les sections de filtre (3) poreuses et perméables au gaz de manière continue entre leurs deux surfaces (7, 8).

2. Procédé selon la revendication 1, **caractérisé en ce qu'**au moins une section individuelle (12) de la bande fibreuse (4) est exclue de l'imprégnation pour former ensuite une ouverture (13) dans le corps de filtre (1).

3. Procédé selon la revendication 1 ou 2, **caractérisé en ce que** l'imprégnation est effectuée sous application d'une pression, en particulier au moyen d'un cylindre (10) ou d'une racle (11).

4. Procédé selon la revendication 3, **caractérisé en ce que** la formation de la section (12) non imprégnée est effectuée par imprégnation partielle au moyen d'un cylindre (10) présentant une texture de surface (14).

5. Procédé selon la revendication 3, **caractérisé en ce que** la formation de la section (12) non imprégnée est effectuée par imprégnation partielle au moyen d'un tamis (15) partiellement couvert, placé entre la bande fibreuse (4) et la racle (11).

6. Procédé selon l'une des revendications 1 à 5, **caractérisé en ce que,** pour former la section (12) non imprégnée, en particulier l'ouverture (13), une découpe (16, 16') est ménagée dans la bande fibreuse (4) ou la bande fibreuse (4) est coupée.

7. Procédé selon l'une des revendications 1 à 6, **caractérisé en ce que** la bande fibreuse (4) plate et perméable est imprégnée de telle manière avec le matériau céramique (6) qu'une partie des fibres (5) de la bande fibreuse (4) est dégagée au niveau des deux surfaces (7, 8).

8. Procédé selon l'une des revendications 1 à 7, **caractérisé en ce que,** pour former un produit intermédiaire (17) avec des canaux de gaz (18), deux bandes fibreuses (4, 4') sont reliées entre elles le long de plusieurs lignes de contact (19), au moins une bande fibreuse (4) étant formée spatialement entre deux lignes de contact (19, 19') voisines.

9. Procédé selon la revendication 8, **caractérisé en ce que** la première bande fibreuse (4) est fabriquée avec une texture ondulée et la deuxième bande fibreuse (4') est fabriquée lisse, les deux bandes fibreuses (4, 4') étant reliées entre elles au niveau de sommets de la texture ondulée pour former les canaux de gaz (18).

10. Procédé selon la revendication 8 ou 9, **caractérisé en ce que** le formage spatial de la bande fibreuse (4), au nombre d'au moins un, est effectuée sous application stabilisatrice de chaleur, en particulier au moyen d'un cylindre ondulé (20, 20') maintenu en température.

11. Procédé selon l'une des revendications 8 à 10, **caractérisé en ce qu'**entre les deux bandes fibreuses voisines (4, 4') est appliqué au moins un cordon (21) de matériau céramique pour former des bouchons de fermeture (22, 22') pour les canaux de gaz (18, 18').

12. Procédé selon l'une des revendications 8 à 11, **caractérisé en ce que** le produit intermédiaire (17) est mis à la forme de l'ébauche du corps de filtre (1) à l'état humide, en particulier par enroulement ou empilement, puis séché et enfin fritté.
